Europäisches Patentamt

**European Patent Office**

Office européen des brevets

(11) Numéro de publication: **0 225 862
B1**

# FASCICULE DE BREVET EUROPEEN

(45) Date de publication du fascicule du brevet:
07.03.90

(21) Numéro de dépôt: 86870163.2

(22) Date de dépôt: 05.11.86

(51) Int. Cl.⁴: **E04H 4/06**

(54) **Corps creux comportant une fermeture étanche à l'eau à ses extrémités.**

(30) Priorité: **06.11.85 DE 8531338 U**

(43) Date de publication de la demande:
**16.06.87 Bulletin 87/25**

(45) Mention de la délivrance du brevet:
**07.03.90 Bulletin 90/10**

(84) Etats contractants désignés:
**AT BE CH DE ES FR GB LI NL**

(56) Documents cités:
**DE-U- 8 518 954
FR-A- 2 223 587
FR-A- 2 551 792
GB-A- 2 012 649**

(73) Titulaire: **Helge, Hans Heinz, Manalhant 19,
B-4820 Dison(BE)**

(72) Inventeur: **Helge, Hans Heinz, Manalhant 19,
B-4820 Dison(BE)**

(74) Mandataire: **Dellicour, Paul, Office de Brevets E.
Dellicour rue Fabry 18/012, B-4000 Liège(BE)**

ACTORUM AG

## Description

La présente invention concerne un corps creux en matière synthétique ou en métal comportant une fermeture étanche à l'eau à chacune de ses extrémités, ladite fermeture étant constituée par un bouchon pouvant être emboîté à l'extrémité ouverte du corps creux et comportant un prolongement s'insérant dans le corps creux, ainsi qu'un orifice destiné à l'introduction d'une colle ou autre substance similaire (voir GB-A 2 012 649).

Dans la pratique, il est souvent problématique de rendre étanche à l'eau les extrémités des profilés creux en matière synthétique ou en métal léger, afin de permettre à ces corps creux de flotter. Cette étanchéité est importante lors de la fabrication d'engins nautiques, mais également en particulier lors de la réalisation de couvertures de piscines au moyen de volets roulants de protection, lesquels sont déroulés à la surface de l'eau.

Le problème est particulièrement important pour les couvertures de piscines en matière synthétique extrudée transparente et colorée, où le côté inférieur est de teinte noire et le côté supérieur est transparent. Il est également important que la surface supérieure de telles couvertures ne soit pas de teinte sombre aux extrémités des lames, étant donné qu'une éventuelle accumulation de chaleur produite par la radiation solaire peut aisément provoquer une dilatation de la matière et un défaut d'étanchéité.

Différentes tentatives d'installation de bouchons d'étanchéité à l'eau sur de tels profilés creux ont déjà été faites, mais ne donnèrent pas de résultats satisfaisants sur le plan des techniques de fabrication et en particulier pour des raisons thermiques.

Dans le brevet GB-A 2 012 649, le demandeur proposait une forme de réalisation où une tige venait substantiellement obturer la section transversale du corps creux et présentait périphériquement une gorge ou rainure pouvant être remplie de colle. Cette forme de réalisation requiert une application excessivement précise de la colle et n'offre malgré tout pas une sécurité suffisante.

L'objet de la présente invention, en se basant sur cet état de la technique, est dès lors de fournir une possibilité plus économique et techniquement plus sûre de réaliser une fermeture étanche à l'eau d'un corps creux.

À cet effet, il est prévu les caractéristiques énoncées à la revendication 1.

Les plaques-pistons forment simplement une délimitation interne des chambres au sein desquelles la masse de remplissage est introduite et représentent en même temps un plan contre lequel la masse de remplissage vient appuyer. Cette masse de remplissage peut combler entièrement la chambre formée entre la plaque-piston et le bouchon, de sorte qu'une meilleure sécurité d'étanchéité à l'eau est obtenue même lors d'une fabrication imprécise du profilé ou lors de tolérances importantes entre le bouchon et le corps creux, ainsi que lors d'une dilatation thermique.

Le remplissage peut avoir lieu par le bouchon ou par une des parois latérales du corps creux. Un deuxième orifice permet de vérifier si la chambre de remplissage est entièrement remplie. En même temps, un tel orifice supplémentaire permet d'évacuer l'air contenu au sein de la chambre.

La présente invention est exposée par la suite de manière plus détaillée, par référence au dessin. Il y est représenté :

Figure 1 une coupe longitudinale d'une partie d'une lame de volet roulant, suivant la ligne I-I à la figure 2,
Figure 2 une vue d'en haut d'un bouchon et
Figure 3 une vue de côté d'une partie d'une autre lame de volet roulant.

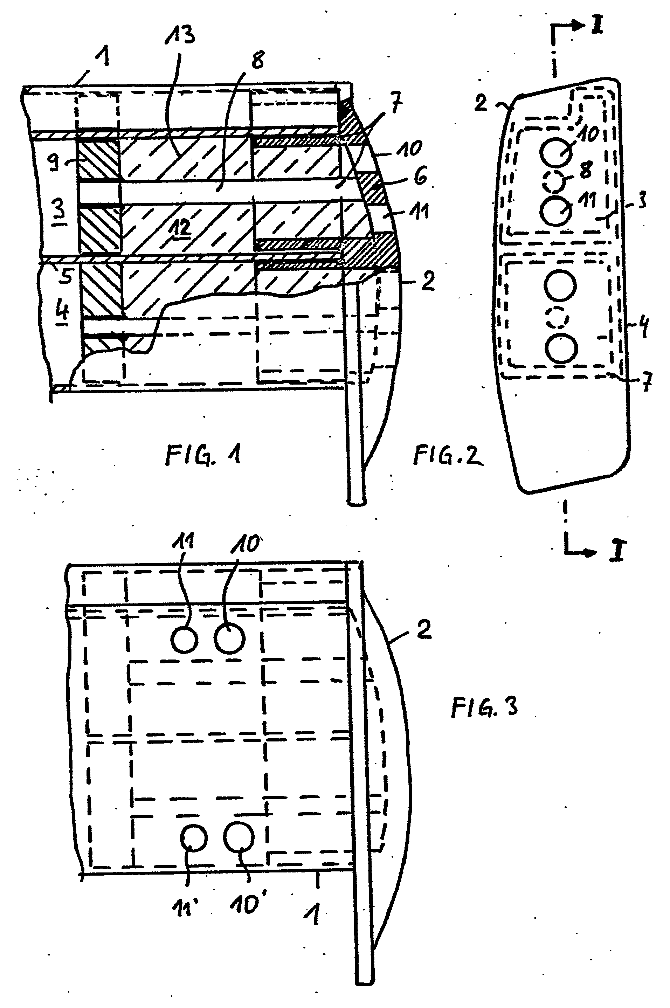

La figure 1 montre un corps creux 1 possédant la forme d'une partie d'une lame de volet tournant, comportant un bouchon 2, lequel est représenté à la figure 2 suivant une vue d'en haut. La lame de volet tournant présente deux chambres 3, 4 axiales parallèles, séparées l'une de l'autre par une paroi 5. Le corps creux 1 est extrudé et est en matière synthétique ou en métal léger.

Le bouchon 2 présente un fond 6 et un prolongement 7 formé d'une seule pièce avec le fond 6 et présentant deux tiges correspondant aux chambres 3, 4. Le prolongement 7 comporte en particulier, pour chacune des chambres 3, 4, une tige 8 relativement mince pourvue, à son extrémité libre, d'une plaque-piston 9 obturant la section transversale de la chambre 3 ou 4 correspondante.

Dans l'exemple de réalisation suivant les figures 1 et 2, il est prévu des orifices de remplissage 10 ainsi que des orifices d'évacuation d'air 11 dans le fond 6 du bouchon 2.

Les orifices 10 sont prévus pour l'introduction d'une masse de remplissage 13 conservant une élasticité permanente, de préférence une matière synthétique du type généralement connu parmi les matériaux d'étanchéité. Lorsque la chambre 12 formée entre le bouchon 2 et la plaque-piston 9 est remplie de cette masse de remplissage 13, il est obtenu une fermeture étanche à l'eau. La masse de remplissage vient appuyer contre la plaque-piston 9 et n'aboutit pas dans l'autre partie du corps creux 1. Le remplissage complet de la chambre 3, 4 est obtenu avec certitude dès qu'un excès de masse de remplissage 13 sort hors de l'orifice d'élimination d'air 11.

Au lieu de prévoir chaque fois un orifice de remplissage 10 et un orifice d'élimination d'air 11, il peut également être envisagé un seul orifice. De même, il n'est pas indispensable que les orifices se situent dans le fond 6 du bouchon 2. Des orifices de remplissage et d'élimination d'air 10' et 11' peuvent également, comme le montre la figure 3, être prévus directement dans une des parois latérales du corps creux 1 et en réalité dans la région de la chambre 12 formée entre la plaque-piston 9 et le fond 6 du bouchon 2. Dans ce cas également, il peut être envisagé chaque fois un seul orifice.

## Revendications

1. Corps creux (1) en matière synthétique ou en métal comportant une fermeture étanche à l'eau à chacune de ses extrémités, ladite fermeture étant constituée par un bouchon (2) pouvant être emboîté à l'extrémité ouverte du corps creux et comportant un prolongement (7) s'insérant dans le corps creux, ainsi qu'un orifice (10) destiné à l'introduction d'une colle ou autre substance similaire, caractérisé en ce que le prolongement (7) est constitué d'au moins une tige (8) relativement mince pourvue, à son extrémité libre, d'une plaque-piston (9) obturant la section transversale du corps creux (1), en ce qu'il est prévu, dans le bouchon (2) ou dans le corps creux (1), au moins un orifice de remplissage (10,10') débouchant dans la chambre (12) formée entre le bouchon (2) et la plaque-piston (9) et en ce que la chambre (12) entre la plaque-piston (9) et le bouchon (2) est remplie d'une masse de remplissage (13) conservant une élasticité permanente, de préférence une matière synthétique.

2. Corps creux suivant la revendication 1, caractérisé en ce que, dans le cas d'un corps creux (1) conçu en tant que lame de volet tournant, le bouchon (2) de chaque chambre (3, 4) axiale des lames comporte un prolongement (7) présentant une tige (8) pourvue d'une plaque-piston (9) et en ce que chaque chambre (12) entre le bouchon (2) et la plaque-piston (9) présente au moins un orifice (10) destiné à l'introduction de la masse de remplissage (13).

3. Corps creux suivant la revendication 1 ou 2, caractérisé en ce que chaque orifice de remplissage (10, 10') est associé à un orifice d'élimination d'air (11, 11').

## Patentansprüche

1. Hohlkörper (1) aus Kunststoff oder Metall mit je einem wasserdichten Verschluß an seinen Enden, wobei der Verschluß aus einer auf das offene Ende des Hohlkörpers steckbaren Stopfen (2) mit einer in den Hohlkörper einsetzbaren Verlängerung (7) und einer Öffnung (10) für die Einführung eines Klebemittels oder dgl. besteht, dadurch gekennzeichnet, daß die Verlängerung (7) aus mindestens einem relativ dünnen Schaft (8) und einer an seinem freien Ende befestigten, den Querschnitt des Hohlkörpers (1) ausfüllenden Kolbenplatte (9) besteht, daß an dem Stopfen (2) oder am Hohlkörper (1) mindestens eine Einfüllöffnung (10, 10') vorgesehen ist, die in die Kammer (12) einmündet, die zwischen dem Stopfen (2) und der Kolbenplatte (9) gebildet ist und daß die Kammer (12) zwischen der Kolbenplatte (9) und der Kappe (2) mit einem dauerelastischen Füllmittel (13), vorzugsweise auf Kunststoffbasis ausgefüllt ist.

2. Hohlkörper nach Anspruch 1, dadurch gekennzeichnet, daß bei einem als Rolladenstab ausgebildeten Hohlkörper (1) der Stopfen (2) für jede Kammer (3, 4) des Rolladenstabes eine einen Schaft (8) aufweisende Verlängerung (7) mit einer Kolbenplatte (9) trägt und daß jede Kammer (12) zwischen dem Stopfen (2) und der Kolbenplatte (9) mindestens eine Einfüllöffnung (10) für das Füllmittel (13) aufweist.

3. Hohlkörper nach Anspruch 1 oder 2, dadurch gekennzeichnet, daß jeder Einfüllöffnung (10, 10') eine Entlüftungsöffnung (11, 11') zugeordnet ist.

## Claims

1. A hollow body (1) of synthetic material or metal, comprising a watertight closure at each of its ends, the said closure being constituted by a stopper (2) capable of being fitted into the open end of the hollow body and comprising an extension (7) which becomes inserted into the hollow body, and also an orifice (10) intended for the introduction of a glue or other similar substance, characterised in that the extension (7) consists of at least one relatively thin rod (8) provided at its free end with a piston plate (9) occluding the transverse section of the hollow body (1), in that in the stopper (2) or in the hollow body (1) there is at least one filling aperture (10, 10') which discharges into the chamber (12) formed between the stopper (10) and the piston plate (9) and in that the chamber (12) between the piston plate (9) and the stopper (2) is filled with a filling composition (13) which preserves a permanent elasticity, preferably a synthetic material.

2. A hollow body according to Claim 1, characterised in that in the case of a hollow body (1) which is designed as a rotary valve plate, the stopper (2) of each axial chamber (3, 4) of the plates comprises an extension (7) having a rod (8) provided with a piston plate (9) and in that each chamber (12) between the stopper (2) and the piston plate (9) has at least one orifice (10) intended for the introduction of the filling composition (13).

3. A hollow body according to Claim 1 or 2, characterised in that each filling orifice (10, 10') is associated with an air elimination orifice (11, 11').

FIG. 1

FIG. 2

FIG. 3